# EUROPÄISCHE PATENTSCHRIFT

(11) **EP 1 957 235 B1**
(45) Veröffentlichungstag und Bekanntmachung des Hinweises auf die Patenterteilung: **17.06.2009**
(21) Anmeldenummer: 06818748.3
(22) Anmeldetag: 23.11.2006
(51) Int. Cl.: B23Q 39/02, B23Q 39/04, B23Q 3/06

(54) **VORRICHTUNG ZUR MEHRFACHBEARBEITUNG**
DEVICE FOR REPEATEDLY MACHINING ADJACENT WORKPIECES
DISPOSITIF DE TRAITEMENT MULTIPLE DE PIECES DISPOSEES LES UNES A COTE DES AUTRES

(30) Priorität: 01.12.2005 DE 102005057658
(43) Veröffentlichungstag der Anmeldung: 20.08.2008
(73) Patentinhaber: Burger, Manuel, London E2 8DA (GB)
(72) Erfinder: Burger, Manuel, London E2 8DA (GB)
(74) Vertreter: Charrier, Rapp & Liebau
(86) Internationale Anmeldenummer: PCT/EP2006/011217
(87) Internationale Veröffentlichungsnummer: WO 2007/062774

(56) Entgegenhaltungen:
- EP-A- 0 100 291
- DE-A1- 4 212 468
- DE-A1- 19 860 867
- DE-A1-0102004 030 15
- US-A- 5 885 199
- US-B1- 6 447 225

## Beschreibung

Die Erfindung betrifft eine Vorrichtung zur Mehrfachbearbeitung mehrerer nebeneinander angeordneter Werkstücke, insbesondere stab- oder rohrförmiger Werkstücke, nach dem Oberbegriff des Anspruchs 1 (siehe z.B., DE-198 60 867-A).

Mit einer derartigen Vorrichtung können mehrere zu bearbeitende Werkstücke gleichzeitig in mehreren Bearbeitungsstationen z.B. gebogen, gestanzt, gelocht, aufgeweitet, mit Gewinden und Verschraubungen versehen, umgebördelt und auch geprüft werden. Derartige Bearbeitungen werden üblicherweise in separaten Endenbearbeitungsmaschinen und nachgeschalteten Pressen durchgeführt. Bei Großserienteilen werden diese in großräumigen Transferanlagen kombiniert, wobei dann pro Endenbearbeitungsstation jeweils nur ein Arbeitsgang durchgeführt wird. Für alle weiteren Bearbeitungen und Kontrollen wird dann eine eigene Bearbeitungseinrichtung eingesetzt. Dadurch ergeben sich relativ große und aufwändige Anlagen. Bei Klein- und Mittelserien werden dagegen in der Regel Endenbearbeitungsstationen mit einer Werkstückklemmung und einem Axialrevolver für die Axialwerkzeuge eingesetzt. Da hier die Bearbeitungen jedoch nacheinander erfolgen, ergibt sich eine vergleichsweise lange Taktzeit. Derartige Bearbeitungsvorrichtungen sind daher für größere Serien unwirtschaftlich.

Aufgabe der Erfindung ist es, eine Vorrichtung zur Mehrfachbearbeitung der eingangs genannten Art zu schaffen, die sowohl für kleinere Serien als auch für Großserien wirtschaftlich einsetzbar ist.

Diese Aufgabe wird durch eine Vorrichtung mit den Merkmalen des Anspruchs 1 gelöst. Zweckmäßige Weiterbildungen und vorteilhafte Ausführungsformen der Erfindung sind Gegenstand der Unteransprüche.

Bei der erfindungsgemäßen Vorrichtung werden mehrere nebeneinander angeordnete Werkstücke zwischen einem Unterteil und einem z.B. als Pressenstößel ausgebildeten, zentral verfahrbaren Oberteil geklemmt. Die Vorrichtung enthält einen Werkzeugträger, der eine relativ zum Unterteil verschiebbare Trägerplatte mit mehreren nebeneinander und untereinander angeordneten Werkzeugaufnahmen für Axialwerkzeuge enthält. Dem Werkzeugträger ist ferner ein Antrieb zur Betätigung der Axialwerkzeuge zugeordnet. Dadurch können beliebige Bearbeitungen zeitgleich an mehreren Bearbeitungsstationen und/oder nacheinender durch die übereinender liegenden Axialwerkzeuge ausgeführt werden. Es besteht so die Möglichkeit, parallele und aufeinander folgende Fertigungsschritte beliebig zu kombinieren. Dadurch wird eine Kombination der Vorteile von Großserien- und Kleinserienanlagen möglich. Durch einfache Verschiebung der in Art eines Werkzeugregisters ausgeführten Trägerplatte können die Werkstücke an den einzelnen Bearbeitungsstationen auch ohne aufwändige Werkzeugwechsel in mehreren Stufen bearbeitet werden.

Das Oberteil ist über zwei mit diesem fest verbundene Seitenwangen an zwei Seitenteilen eines Rahmens vertikal verschiebbar geführt. Die Seitenwangen können sich im Wesentlichen über die gesamte Höhe der Seitenteile erstrecken und sind über deren gesamte oder nahezu gesamte Länge geführt. Dadurch wird eine besonders stabile und genau Führung des Oberteils ermöglicht.

Die Trägerplatte kann durch Erweiterung auch ohne weiteres an die unterschiedlichen Anforderungen angepasst werden. Sie kann z.B. einteilig sein oder aus mehreren auch getrennt verfahrbaren Segmenten aufgebaut sein. Die erfindungsgemäße Vorrichtung weist auch einen äußerst kompakten und einfachen Aufbau auf, der hohe Produktionsgeschwindigkeiten ermöglicht.

Der Antrieb zur Betätigung der Axialwerkzeuge wird zweckmäßigerweise durch eine auf einem Gestell horizontal verfahrbare Traverse gebildet, die durch einen Stellmotor angetrieben wird. Der Hubantrieb zur Verschiebung des Oberteils enthält in einer bevorzugten Ausführung eine in dem Unterteil drehbar gelagerte und motorisch drehbare Antriebswelle mit Exzenterzapfen, die über jeweils ein Gleitstück in ein Langloch der Seitenwangen eingreifen. Es können aber auch andere geeignete Hubantriebe vorgesehen sein.

In dem Unterteil und/oder den Oberteil können außerdem Zusatzantriebe für die Werkstückbearbeitung untergebracht sein.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine erfindungsgemäße Vorrichtung zur Mehrfachbearbeitung mehrerer nebeneinander angeordneter Werkstücke in einer schematischen Seitenansicht;
- **Figur 2**: die Vorrichtung von Figur 1 in einer zum Teil geschnittenen Vorderansicht;
- **Figur 3**: einen Teil der in Figur 1 gezeigten Vorrichtung mit einem Werkzeugträger in einer Rückansicht und
- **Figur 4**: eine vergrößerte Teilansicht einer Seitenwangenführung.

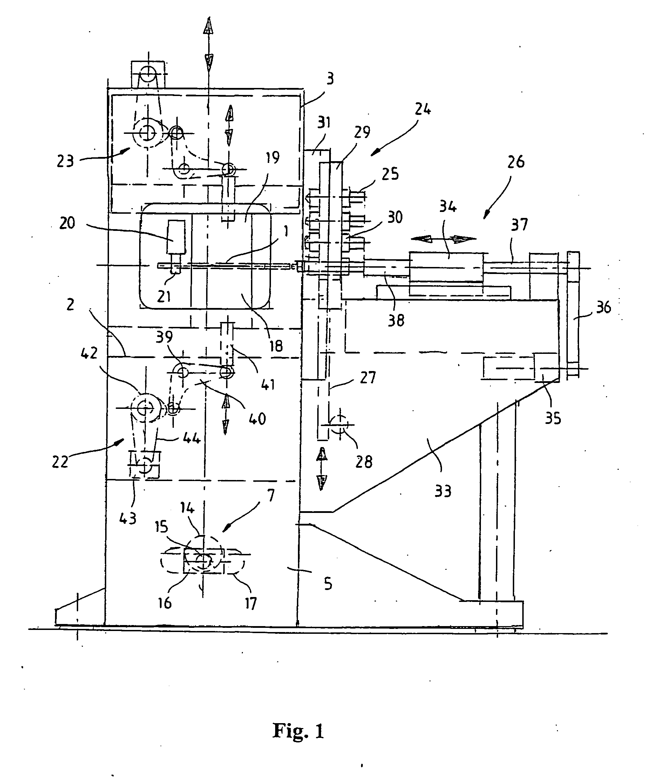

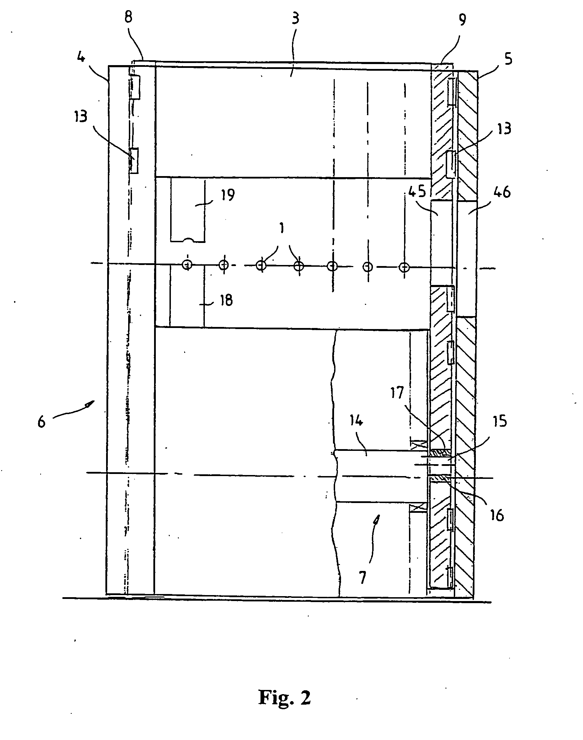

Die in den Figuren 1 und 2 in einer Seiten- und Vorderansicht schematisch dargestellte Vorrichtung zur Mehrfachbearbeitung mehrerer nebeneinander angeordneter Werkstücke 1 ist insbesondere für die Komplettbearbeitung stab- oder rohrförmiger Werkstücke z.B. zur Herstellung von Gurt- und Schlossstrafferrohren, Brems- und Kraffstoffleitungen, Kraftstoffeinfüllrohren, Einspritzleitungen und dgl. konzipiert. Sie enthält ein als Pressentisch ausgebildetes Unterteil 2 und ein als Pressenstößel ausgeführtes Oberteil 3, das zwischen zwei Seitenteilen 4 und 5 eines Rahmens 6 relativ zum Unterteil 2 verschiebbar geführt und durch einen Hubantrieb 7 vertikal bewegbar ist.

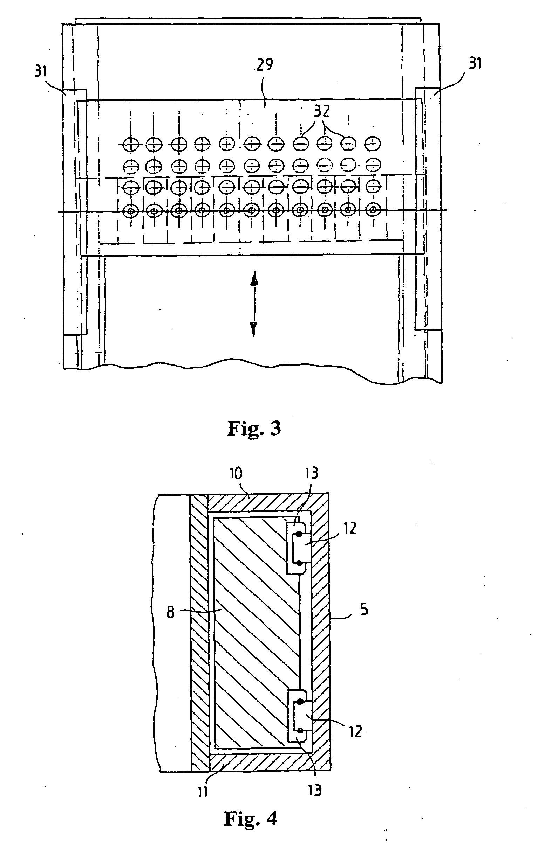

Wie aus Figur 2 hervorgeht, ist das als Pressenstößel ausgeführte Oberteil 3 über zwei mit diesem fest verbundene Seitenwangen 8 und 9 an den beiden Seitenteilen 4 und 5 des Rahmens 6 vertikal verschiebbar angeordnet. Die beiden Seitenteile 4 und 5 weisen beim gezeigten Ausführungsbeispiel einen in Figur 4 erkennbaren U-förmigen Querschnitt mit zwei nach innen ragenden Schenkeln 10 und 11 auf. Zwischen den beiden Schenkeln 10 und 11 der Seitenteile 4 und 5 sind die Seitenwangen 8 und 9 über Linearführungen verschiebbar geführt. Die Linearführen bestehen aus Führungsschienen 12 und dazugehörigen Führungsschuhen 13, die an den Seitenteilen 4 und 5 bzw. den Seitenwangen 8 und 9 angeordnet sind. Die Seitenwangen 8 und 9 erstrecken sich über die gesamte Höhe der beiden Seitenteile 4 und 5 und sind nahezu über deren gesamte Länge geführt. Dadurch wird eine besonders stabile und genaue Führung des Oberteils 3 erreicht.

Gemäß den Figuren 1 und 2 umfasst der Hubantrieb 7 zur Verschiebung des Oberteils 3 eine in dem Unterteil 2 drehbar gelagerte und motorisch angetriebene horizontale Antriebswelle 14, die an ihren beiden Enden seitlich vorstehende Exzenterzapfen 15 enthält. Diese Exzenterzapfen 15 greifen über jeweils ein Gleitstück 16 in ein Langloch 17 der jeweiligen Seitenwangen 8 und 9 ein. Durch Drehung der Antriebswelle 14 wird so das Oberteil 3 über die Seitenwangen 8 und 9 gegenüber dem Untereil 2 verschoben.

Auf dem Unterteil 2 und am Oberteil 3 sind mehrere nebeneinander angeordnete - in den Figuren 1 und 2 nur schematisch angedeutete - untere und obere Werkstückhalterungen 18 bzw. 19 befestigt, zwischen denen die Werkstücke 1 gehalten und/oder bearbeitet werden. Zwischen dem Unterteil 2 und dem Oberteil 3 befinden sich so mehrere nebeneinander angeordnete Bearbeitungsstationen, in denen die Werkstücke 1 in aufeinander folgenden Schritten bearbeitet werden. Der Transport der Werkstücke 1 von der einen zur nächsten Bearbeitungsstation erfolgt durch eine in Figur 1 dargestellte Transferschiene 20, die mit entsprechenden Greifern 21 versehen ist.

Die Werkstückhalterungen 18 und 19 sind durch nicht dargestellte Halteschienen und Arretierstifte einfach auswechselbar. Die untere Werkstückhalterung 18 kann z.B. als Hohlform und die obere Werkstückhalterung 19 als zur Hohlform gehöriges Gegenstück ausgeführt sein. Sie dienen zur Umformung und/oder zur Fixierung der Werkstücke 1 während der Bearbeitung, können aber auch zusätzliche Bearbeitungsvorrichtungen bzw. Werkzeuge enthalten, durch welche die Werkstücke 1 entweder über die Abwärtsbewegung des Oberteils 3 oder durch zusätzliche Antriebe in dem Unterteil 2 und/oder dem Oberteil 3 bearbeitet werden. So können im Oberteil 2 und im Unterteil 3 in Figur 1 gestrichelt dargestellte Zusatzantriebe 22 und 23 untergebracht sein, durch die in den Werkzeughalterungen 18 und 19 integrierte Stanz-, Präge-, Loch- oder andere Bearbeitungsvorrichtungen betätigt werden.

An der Rückseite des Rahmens 6 ist ein in Figur 1 dargestellter Werkzeugträger 24 zur Aufnahme von Axialwerkzeugen 25 für die Endenbearbeitung der Werkstücke 1 sowie ein dazugehöriger Antrieb 26 angebracht. Der Werkzeugträger 24 enthält eine über eine Zahnstange 27 und ein Antriebsritzel 28 in der Höhe verstellbare Trägerplatte 29, die mehrere nebeneinander und untereinander angeordnete Werkzeugaufnahmen 30 für die Axialwerkzeuge 25 enthält.

In Figur 3 ist erkennbar, dass die Trägerplatte 29 zwischen zwei seitlichen Führungsleisten 31 vertikal verschiebbar geführt ist. Sie enthält mehrere nebeneinander und übereinander angeordnete Öffnungen 32, in denen die Werkzeugaufnahmen 30 für die Axialwerkzeuge 25 angeordnet sind. Der seitliche Abstand der Öffnungen 32 in jeder Reihe entspricht dem Abstand der Werkstücke 1 in den nebeneinander angeordneten Bearbeitungsstationen, so dass mehrere Werkstücke 1 an der Rückseite bearbeitet werden können. Für jedes Werkstück 1 stehen außerdem mehrere untereinander angeordnete Werkzeugaufnahmen 30 für unterschiedliche Axialwerkzeuge 25 zur Verfügung. Die Trägerplatte 29 kann einteilig oder mehrteilig ausgeführt sein.

Der in Figur 1 dargestellte Antrieb 26 für die in der Trägerplatte 29 angeordneten Axialwerkzeuge 25 enthält eine auf einem Gestell 33 horizontal verschiebbar geführte Traverse 34, die durch einen Stellmotor 35 über einen Antriebriemen 36 und zwei parallele Antriebsspindeln 37 horizontal verschiebbar ist. In der Traverse 34 sind horizontal nebeneinander liegende Aufnahmeöffnungen für Betätigungselemente 38 zur Betätigung der Axialwerkzeuge 25 vorgesehen. Die Aufnahmeöffnungen für die Betätigungselemente 38 sind derart angeordnet, dass diese mit den Werkzeugaufnahmen 30 fluchten. Der horizontale Abstand der Aufnahmeöffnungen ist an den seitlichen Abstand der Öffnungen 32 für die Werkzeugaufnahmen 30 angepasst. Durch Verschiebung der Traverse 34 können so die in der Trägerplatte 29 angeordneten Werkzeuge betätigt werden.

Die in Figur 1 ebenfalls gezeigten Zusatzantriebe 22 und 23 enthalten einen um eine Drehachse 39 verschwenkbaren Kipphebel 40, der mit dem einen Ende in Kontakt mit einem Stößel 41 und mit dem anderen Ende in Kontakt mit einer Kurvenscheibe 42 steht. Die mit einem oder mehreren Nocken versehene Kurvenscheibe 42 wird von einem Motor 43 über einen Riemen 44 angetrieben. Durch Drehung der Kurvenscheibe 42 kann so der Stößel 41 axial bewegt und z.B. ein in dem Werkzeughalter integriertes Stanz-, Präge- oder Biegewerkzeug betätigt werden.

Im Folgenden wird die Funktionsweise der vorstehend beschriebenen Vorrichtung erläutert:

Die Zufuhr der zu bearbeitenden Werkstücke 1 kann von einem nicht gezeigten Teilebunker, von der Stange oder von einem Coil nach vorheriger Trennung erfolgen. Über die mit dem Greifern 21 versehene Transferschiene 20, die durch in Figur 2 gezeigte seitliche Durchgänge 45 und 46 in den Seitenteilen 4 bzw. 5 und Seitenwangen 8 bzw. 9 verläuft, werden die Werkstücke 1 getaktet von der einen zur nächsten Bearbeitungsstation transportiert.

Nach dem Ablegen der Werkstücke 1 auf den unteren Werkstückhalterungen 18 wird das als Pressenstößel ausgeführte Oberteil 3 mit den daran befestigten oberen Werkstückhalterungen 19 durch Drehung der Antriebswelle 14 nach unten gefahren. Dabei kann bereits durch die Schließbewegung der oberen Werkstückhalterungen 19 eine Bearbeitung erfolgen, wobei die Werkstücke 1 dann über einen den oberen Werkstückhalterungen vorauseilenden Niederhalter fixiert werden müssen. Die Bearbeitung kann allerdings auch erst nach dem Schließen der oberen Werkstückhalterungen 19 durch in den Werkstückhalterungen integrierte Werkzeuge erfolgen. Die Betätigung dieser Werkzeuge erfolgt durch die im Unterteil 2 und/oder im Oberteil 3 angeordneten Zusatzantriebe 22 und 23 über den die Werkzeuge betätigenden Stößel 41. Die Bewegung der Stößel 41 wird über die von dem Motor 43 angetriebene Kurvenscheibe 42 und den Kipphebel 40 erzeugt. Die Kurvenscheibe 42 kann an ihrem Umfang mehrere Nocken enthalten, die für unterschiedliche Bearbeitungen eine individuelle Zusatzbewegung ermöglichen.

Die Endenbearbeitung der Werkstücke 1 erfolgt durch die in der Trägerplatte 29 angeordneten Axialwerkzeuge 25. Bei diesen kann es sich um Werkzeuge zum Prägen, Aufweiten, Bördeln etc. aber auch um Werkzeuge zur Herstellung von Gewinden, zur Montage von Muttern, zum Prüfen oder dgl. handeln. Die Bewegung zur Betätigung der Axialwerkzeuge 25 wird durch Verschiebung der Traverse 34 erzeugt. Die Axialwerkzeuge selbst sind in den Werkzeugaufnahmen 30 der Trägerplatte 29 gelagert.

Wenn mit Hilfe der Traverse 34 ein Axialhub ausgeführt ist, kann die Traverse 34 zurückgefahren und die Trägerplatte 29 nach oben oder unten in eine nächste Werkzeugposition verschoben werden. So können auch ohne aufwändige Werkzeugwechsel aufeinander folgende Arbeitsgänge an einer Bearbeitungsstation und/oder gleichzeitig an verschiedenen Bearbeitungsstationen durchgeführt werden. Bei kürzeren Werkstücken kann auch eine Wendestation vorgesehen werden, durch welche die Werkstücke zur Bearbeitung an beiden Enden gewendet werden. Bei längeren Werkstücken können zwei Vorrichtungen derart gegenübergestellt werden, dass eine Bearbeitung an beiden Enden ermöglicht wird.

Wenn die Bearbeitung beendet ist, werden die Werkstücke 1 mit Hilfe der an der Transferschiene 20 angebrachten Greifer 21 zunächst fixiert, bevor das Oberteil 3 nach oben verfahren wird. Nach dem Öffnen des Oberteils 3 werden die Werkstücke 1 durch die an der Transferschiene 20 angeordneten Greifer 21 aus der unteren Werkstückhalterung 18 entnommen und zur nächsten Bearbeitungsstation transportiert. Bei einfacheren Bearbeitungen können auch Bearbeitungsstationen übersprungen werden. Anschließend kann ein neuer Bearbeitungszyklus beginnen.

Durch die vorstehend beschriebene Vorrichtung kann eine Komplettbearbeitung vom Coil bis zum fertigen Werkstück durchgeführt werden, wobei neben den Endenbearbeitungen auch weitere Bearbeitungsschritte wie z.B. Stanzen, Prägen, Biegen, Prüfen und dgl. möglich sind. Die Vorrichtung ist äußerst flexibel und universell einsetzbar.

## Patentansprüche

1. Vorrichtung zur Mehrfachbearbeitung mehrerer nebeneinander angeordneter Werkstücke (1), insbesondere stab- oder rohrförmiger Werkstücke, mit einem Unterteil (2) zur Auflage der Werkstücke (1), einem gegenüber dem Unterteil (2) motorisch bewegbaren Oberteil (3) und einem Werkzeugträger (24) zur Aufnahme mehrerer Werkzeuge, wobei der Werkzeugträger (24) eine relativ zum Unterteil (2) motorisch verschiebbare Trägerplatte (29) mit mehreren nebeneinander und untereinander angeordneten Werkzeugaufnahmen (30) für Axialwerkzeuge (25) enthält und dem Werkzeugträger (24) ein Antrieb (26) zur Betätigung der Axialwerkzeuge (25) zugeordnet ist, **dadurch gekennzeichnet, dass** das Oberteil (3) zur Halterung der Werkstücke an dem Unterteil (2) ausgebildet ist und über zwei mit dem Oberteil fest verbundene Seitenwangen (8, 9) an zwei Seitenteilen (4, 5) eines Rahmens (6) vertikal verschiebbar geführt und durch einen Hubantrieb (7) verfahrbar ist.

2. Vorrichtung nach Anspruch 1, **dadurch gekennzeichnet, dass** die Trägerplatte (29) an dem Rahmen (6) vertikal verschiebbar geführt ist und mehrere übereinander liegende Reihen von Werkzeugaufnahmen (30) enthält.

3. Vorrichtung nach Anspruch 1 oder 2, **dadurch gekennzeichnet, dass** sich die Seitenwangen (8, 9) im wesentlichen über die gesamte Höhe der Seitenteile (4, 5) erstrecken und nahezu über deren gesamte Länge geführt sind.

4. Vorrichtung nach einem der Ansprüche 1 bis 3, **dadurch gekennzeichnet, dass** die Trägerplatte (29) aus einem Teil oder aus individuell angetriebenen Segmenten besteht.

5. Vorrichtung nach einem der Ansprüche 1 bis 4, **dadurch gekennzeichnet, dass** der Abstand der mehreren nebeneinander angeordneten Werkzeugaufnahmen (30) dem Abstand der auf dem Unterteil (2) angeordneten Werkstücke (1) entspricht.

6. Vorrichtung nach einem der Ansprüche 1 bis 5, **dadurch gekennzeichnet, dass** der Antrieb (26) zur Betätigung der Axialwerkzeuge (25) eine auf einem Gestell (33) horizontal verschiebbar geführte und durch einen Stellmotor (35) angetriebene Traverse (34) enthält.

7. Vorrichtung nach Anspruch 6, **dadurch gekennzeichnet, dass** die Traverse (34) durch den Stellmotor (35) über einen Antriebsriemen (36) und zwei parallele Antriebsspindeln (37) verschiebbar ist.

8. Vorrichtung nach Anspruch 6 oder 7, **dadurch gekennzeichnet, dass** in der Traverse (34) nebeneinander liegende Aufnahmeöffnungen für Betätigungselemente (38) zur Betätigung der Axialwerkzeuge (25) vorgesehen sind.

9. Vorrichtung nach einem der Ansprüche 1 bis 8, **dadurch gekennzeichnet, dass** der Hubantrieb (7) eine in dem Unterteil (2) drehbar gelagerte und motorisch drehbare Antriebswelle (14) mit Exzenterzapfen (15) enthält, die über jeweils ein Gleitstück (16) in ein Langloch (17) der Seitenwangen (8, 9) eingreifen.

10. Vorrichtung nach einem der Ansprüche 1 bis 9, **dadurch gekennzeichnet, dass** auf dem Unterteil (2) und am Oberteil (3) mehrere nebeneinander angeordnete obere und untere Werkstückhalterungen (18, 19) befestigt sind.

11. Vorrichtung nach einem der Ansprüche 1 bis 10, **dadurch gekennzeichnet, dass** in dem Unterteil (2) und/oder dem Oberteil (3) Zusatzantriebe (22, 23) für eine Werkzeugbetätigung angeordnet sind.

12. Vorrichtung nach Anspruch 11, **dadurch gekennzeichnet, dass** die Zusatzantriebe (22, 23) einen axial verschiebbaren Stößel (41) enthalten, der durch eine motorisch drehbare Kurvenscheibe (42) über einen um eine Drehachse (39) verschwenkbaren Kipphebel (40) betätigbar ist.

13. Vorrichtung nach einem der Ansprüche 1 bis 12, **dadurch gekennzeichnet, dass** zwischen dem Unterteil (2) und dem Oberteil (3) eine mit Greifern (21) versehene Transferschiene (20) zum Transport der Werkstücke angeordnet ist.

## Claims

1. Device for repeatedly machining a plurality of workpieces (1), in particular rod-shaped or tube-shaped workpieces, arranged next to one another, with a lower part (2) for supporting the workpieces (1), an upper part (3) moveable by motor in relation to the lower part (2), and a tool carrier (24) for receiving a plurality of tools, wherein the tool carrier (24) comprises a carrier plate (29) which is displaceable by motor relative to the lower part (2) and has a plurality of tool holding fixtures (30) for axial tools (25) arranged next to one another and under one another, and the tool carrier (24) has an associated drive (26) for operating the axial tools (25), **characterised in that** the upper part (3) is designed to hold the workpieces on the lower part (2) and is guided displaceable vertically on two side parts (4, 5) of a frame (6) by means of two side pieces (8, 9) connected securely to the upper part, and can be moved by a lifting drive (7).

2. Device according to claim 1, **characterised in that** the carrier plate (29) is guided displaceable vertically on the frame (6) and comprises a plurality of rows of tool holding fixtures (30) lying one above another.

3. Device according to claim 1 or 2, **characterised in that** the side pieces (8, 9) essentially extend over the entire height of the side parts (4, 5) and are guided over almost their entire length.

4. Device according to one of claims 1 to 3, **characterised in that** the carrier plate (29) consists of one part or of individually driven segments.

5. Device according to one of claims 1 to 4, **characterised in that** the spacing of the plurality of tool holding fixtures (30) arranged next to one another matches the spacing of the workpieces (1) arranged on the lower part (2).

6. Device according to one of claims 1 to 5, **characterised in that** the drive (26) for operating the axial tools (25) comprises a crossmember (34) which is guided displaceable horizontally on a frame (33) and driven by a control motor (35).

7. Device according to claim 6, **characterised in that** the crossmember (34) can be displaced by the control motor (35) by means of a driving belt (36) and two parallel driving spindles (37).

8. Device according to claim 6 or 7, **characterised in that** receiving openings are provided lying next to one another in the crossmember (34) for actuating elements (38) for operating the axial tools (25).

9. Device according to one of claims 1 to 8, **characterised in that** the lifting drive (7) comprises a driving shaft (14) which is mounted rotatably in the lower part (2) and rotatable by motor and has eccentric pivots (15) which engage in each case by means of a slide (16) in a slot (17) in the side pieces (8, 9).

10. Device according to one of claims 1 to 9, **characterised in that** a plurality of upper and lower workpiece fixtures (18, 19) arranged next to one another are fastened on the lower part (2) and on the upper part (3).

11. Device according to one of claims 1 to 10, **characterised in that** auxiliary drives (22, 23) for tool operation are arranged in the lower part (2) and/or the upper part (3).

12. Device according to claim 11, **characterised in that** the auxiliary drives (22, 23) comprise an axially displaceable plunger (41) which can be actuated by a cam plate (42) rotatable by motor by means of a rocking lever (40) pivotable about a pivot axis (39).

13. Device according to one of claims 1 to 12, **characterised in that** a transfer rail (20) provided with grippers (21) is arranged between the lower part (2) and the upper part (3) to transport the workpieces.

## Revendications

1. Dispositif de traitement multiple de plusieurs pièces (1) disposées les unes à côté des autres, en particulier de pièces en forme de barre ou de tube, avec une partie inférieure (2) pour l'appui des pièces (1), une partie supérieure (3) mobile de manière motorisée par rapport à la partie inférieure (2) et un porte-outil (24) pour la réception de plusieurs outils, le porte-outil (24) contenant une plaque porteuse (29) coulissante de manière motorisée par rapport à la partie inférieure (2) avec plusieurs logements d'outil (30) disposés les uns à côté des autres et les uns sous les autres pour des outils axiaux (25) et au porte-outil (24) étant associé un entraînement (26) pour l'actionnement des outils axiaux (25), **caractérisé en ce que** la partie supérieure (3) est réalisée pour le maintien des pièces sur la partie inférieure (2) et est guidée à coulissement vertical par deux joues latérales (8, 9) reliées fixement à la partie supérieure sur deux parties latérales (4, 5) d'un cadre (6) et peut être déplacée par un entraînement de levage (7).

2. Dispositif selon la revendication 1, **caractérisé en ce que** la plaque porteuse (29) est guidée à coulissement vertical sur le cadre (6) et contient plusieurs rangées de logements d'outil (30) se trouvant les uns au-dessus des autres.

3. Dispositif selon la revendication 1 ou 2, **caractérisé en ce que** les joues latérales (8, 9) s'étendent essentiellement sur toute la hauteur des parties latérales (4, 5) et sont guidées sur presque toute leur longueur.

4. Dispositif selon l'une quelconque des revendications 1 à 3, **caractérisé en ce que** la plaque porteuse (29) se compose d'une partie ou de segments entraînés individuellement.

5. Dispositif selon l'une quelconque des revendications 1 à 4, **caractérisé en ce que** la distance entre plusieurs logements d'outil (30) disposés les uns à côté des autres correspond à la distance entre les pièces (1) disposées sur la partie inférieure (2).

6. Dispositif selon l'une quelconque des revendications 1 à 5, **caractérisé en ce que** l'entraînement (26) pour l'actionnement des outils axiaux (25) contient une traverse (34) entraînée par un servomoteur (35) et guidée à coulissement horizontal sur un châssis (33).

7. Dispositif selon la revendication 6, **caractérisé en ce que** la traverse (34) peut coulisser grâce au servomoteur (35) par le biais d'une courroie d'entraînement (36) et de deux broches d'entraînement (37) parallèles.

8. Dispositif selon la revendication 6 ou 7, **caractérisé en ce que** des ouvertures de réception se trouvant les unes à côté des autres dans la traverse (34) pour des éléments d'actionnement (38) destinés à l'actionnement des outils axiaux (25) sont prévues.

9. Dispositif selon l'une quelconque des revendications 1 à 8, **caractérisé en ce que** l'entraînement de levage (7) contient un arbre d'entraînement (14) rotatif de manière motorisée et logé à rotation dans la partie inférieure (2) avec des goupilles d'excentrique qui s'engagent par le biais respectivement d'une pièce coulissante (16) dans un trou oblong (17) des joues latérales (8, 9).

10. Dispositif selon l'une quelconque des revendications 1 à 9, **caractérisé en ce que** plusieurs porte-pièces (18, 19) inférieurs et supérieurs disposés les uns à côté des autres sont fixés sur la partie inférieure (2) et sur la partie supérieure (3).

11. Dispositif selon l'une quelconque des revendications 1 à 10, **caractérisé en ce que** des entraînements supplémentaires (22, 23) pour un actionnement d'outil sont disposés dans la partie inférieure (2) et/ou la partie supérieure (3).

12. Dispositif selon la revendication 11, **caractérisé en ce que** les entraînements supplémentaires (22, 23) contiennent un coulisseau (41) coulissant axialement qui peut être actionné par un disque à came (42) rotatif de manière motorisée par le biais d'un culbuteur (40) pivotant autour d'un axe de rotation (39).

13. Dispositif selon l'une quelconque des revendications 1 à 12, **caractérisé en ce qu'**un rail de transfert (20) pourvu de griffes (21) est disposé pour le transport des pièces entre la partie inférieure (2) et la partie supérieure (3).
